# EUROPEAN PATENT APPLICATION

(11) **EP 2 271 046 A1**
(43) Date of publication of application: **05.01.2011**
(21) Application number: 09726751.2
(22) Date of filing: 09.03.2009
(51) Int. Cl.: H04L 29/06

(54) **METHOD AND APPARATUS FOR CONTROLLING REPORTING MATCHING RESULT**

(30) Priority: 01.04.2008 CN 200810066438
(71) Applicant: Huawei Technologies Co., Ltd., Longgang District, Shenzhen Guangdong 518129 (CN)
(72) Inventor: LIN, Yangbo c/o Huawei Technologies Co.Ltd., Int. Prop.Dept, Shenzhen (CN)
(74) Representative: Kreuz, Georg Maria
(86) International application number: PCT/CN2009/070694
(87) International publication number: WO 2009/121258

(57) **Abstract**

A method and an apparatus for controlling reporting of a matching result are disclosed. A matching failure reporting parameter is set by the MGC onto the MG, or is preset on the MG. In this way, the MG is controlled whether to report the result of matching failure to the MGC or not, and thus the system overhead is reduced and the operation efficiency is improved.

## Description

This application claims priority to Chinese Patent Application No. 200810066438.4, filed with the Chinese Patent Office on April 01, 2008 and entitled "Method and Apparatus for Controlling Reporting of a Matching Result", which is hereby incorporated by reference in its entirety.

### FIELD OF THE INVENTION

The present invention relates to communication technologies, and in particular, to a technology for controlling reporting of matching failure in an architecture where the service is separated from the bearer.

### BACKGROUND OF THE INVENTION

A Media Gateway Controller (MGC) and a Media Gateway (MG) are two key components of a packet-switched network in an architecture where the service is separated from the bearer. The MGC is responsible for service control while the MG is responsible for media bearing, thus achieving separation of a service control plane from a media bearing plane. In this way, network resources can be shared sufficiently, device upgrade and service expansion can be simplified, and the development and maintenance cost can be reduced dramatically.

During development of the present invention, the inventor finds at least the following problems in the prior art:
When the MGC instructs the MG to collect information such as user dial-up and register signals, the MGC generally provides a matching template for the MG as a processing basis. No matter whether the matching succeeds, the MG reports the matching result to the MGC, which increases the system overhead and lowers the operation efficiency. Therefore, an effective mechanism needs to be added to make the MGC control the MG whether to report a result of matching failure.

### SUMMARY OF THE INVENTION

The embodiments of the present invention provide a method and an apparatus for controlling reporting of matching results to flexibly control the MG whether to report a result of matching failure to the MGC, reducing the system overhead and improving the operation efficiency.

A method for controlling reporting of a matching result in an embodiment of the present invention includes: by an MG, performing detection according to a set event capable of reporting a matching result, where the event includes a matching failure reporting parameter; and deciding whether to report a detection result according to a value of the matching failure reporting parameter if the detection result is matching failure.

An MG provided in an embodiment of the present invention includes: a setting unit, configured to set an event capable of reporting a matching result, where the event includes a matching failure reporting parameter; a matching unit, configured to perform matching according to the event set by the setting unit and obtain a matching result; and a reporting unit, configured to decide whether to report the matching result obtained by the matching unit to an MGC according to a value of the matching failure reporting parameter in the event set by the setting unit.

An MGC provided in an embodiment of the present invention includes: a sending unit, configured to send a setting to an MG, where the setting instructs the MG to set an event capable of reporting a matching result and a matching failure reporting parameter in the event; and a receiving unit, configured to receive a detection result reported by the MG.

Compared with the prior art, the embodiments of the present invention bring at least the following benefits:
Through the method and the apparatus for controlling reporting of matching failure herein, a matching failure reporting parameter is set by the MGC onto the MG, or is preset on the MG. This parameter controls the MG whether to report the result of matching failure to the MGC, thus reducing the system overhead and improving the operation efficiency.

### BRIEF DESCRIPTION OF THE DRAWINGS

FIG. 1 is a networking diagram of an MG and an MGC applied in an embodiment of the present invention;
FIG. 2 is a flowchart of an embodiment of the present invention;
FIG. 3 is a flowchart of another embodiment of the present invention; and
FIG. 4 shows a structure of a system in an embodiment of the present invention.

### DETAILED DESCRIPTION OF THE EMBODIMENTS

To make the technical solution of the present invention clearer, the present invention is detailed below with reference to accompanying drawings and exemplary embodiments.

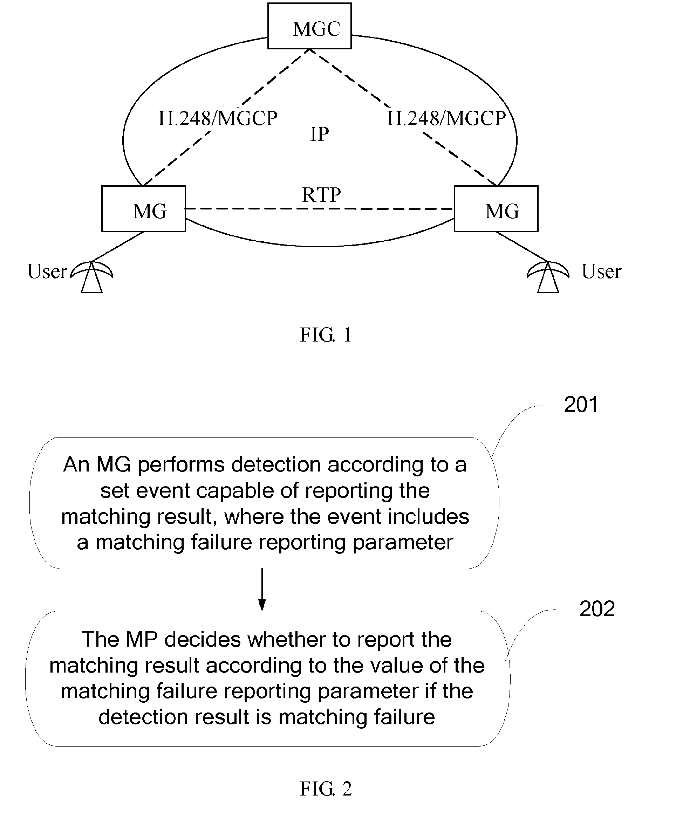

FIG. 1 is a networking diagram of an MG and an MGC applied in an architecture where the service is separated from the bearer in an embodiment of the present invention.

A (media) gateway control protocol is a main protocol for communication between the MG and the MGC. The currently prevalent gateway control protocols include the H.284/Gateway Control Protocol (MeGaCo) and the Media Gateway Control Protocol (MGCP).

Taking H.248 as an example, various resources on the MG are abstracted as terminations. Terminations can be grouped into physical terminations and ephemeral terminations. The former represents some physical terminations having semi-permanent existence, such as a Time Division Multiplex (TDM) timeslot, and the latter represents some public resources that are applied for temporarily and will be released after use, such as a Real-time Transport Protocol (RTP) stream. Further, a special termination called root termination represents the entire MG. The association between terminations is abstracted as a context. The context may include a plurality of terminations. Therefore, a topology is used to describe the association between terminations. A termination having not been associated with another termination yet is contained in a special context known as Null Context.

Based on the foregoing abstract connection model, the interactions between the service and the bearer are essentially operations for the termination and the context. Such operations are performed through command requests and replies exchanged between the MGC and the MG. The types of commands include: Add, Modify, Subtract, Move, AuditValue, AuditCapabilities, Notify, and ServiceChange. The parameters carried in a command, also known as descriptors, are categorized into Property, Signal, Event, and Statistic. The parameters correlated by a service are logically aggregated into a package.

The control exercised by the MGC to the MG may be intended for a termination or the stream on the termination. A TerminationState descriptor covers the features not specific to streams on the termination, for example, ServiceState, and EventBufferControl. A Media descriptor covers the features specific to streams on the termination. A Media descriptor includes a series of Stream descriptors. Each Stream descriptor is intended for a single stream, and includes a LocalControl descriptor, a Local descriptor, and a Remote descriptor. A LocalControl descriptor includes stream-related control information, for example, Mode, ReserveGroup, and ReserveValue. The Local descriptor includes the features of the streams received locally, and the Remote descriptor includes the features of the streams received remotely, for example, address, port, and codec algorithm, which take the form of the Session Description Protocol (SDP).

Therefore, for the MGC to control the MG to remove the dial-up information in the media stream, the (media) gateway control protocol needs to be extended firstly. The detailed method is as follows:
A matching result is reported through an event mechanism, for example, through a DigitMap Completion event for collecting digits dialed by the user, or a Detection Events Map event for collecting register signals. The similar events capable of reporting the matching result are set by the MGC onto the MG, or are preset on the MG. After the MG performs detection (the detection here includes a matching operation because the MG is capable of reporting the matching result), the MG obtains the corresponding result, and then reports the result to the MGC. At the time of setting/configuring such events, some parameters may be used to control the matching; at the time of reporting the result, other parameters may be used to carry the result.

For similar events capable of reporting the matching result, a parameter is defined at the time of setting or configuring the event to indicate whether a result of matching failure is reported through this event. For example, the parameter is named "Unsuccessful Match Reporting (umr)". This parameter is of a Boolean type. If the value of the parameter is "On", the result of matching failure needs to be reported; if the value of the parameter is "Off', the result of matching failure does not need to be reported. By default, the value of the parameter is "On".

If an event capable of reporting a matching result on the MG needs to be controlled as not being used to report matching failure to the MGC, when the MGC sets the event onto the MG or when the event is preset on the MG, the umr parameter of this event needs to be set or configured to "Off'. The MG performs matching according to this setting or configuration. If the matching succeeds, the MG reports this event to the MGC; if the matching fails, the MG does not report this event to the MGC.

If the matching result is not simply categorized into success and failure, but categorized in more detail, the scope covered by matching failure needs to be stipulated. For example, the matching result reported through a DigitMap Completion event may be Unambiguous Match, indicating that only one candidate matches; or may be Partial Match, indicating that no candidate matches; or may be Full Match, indicating that multiple candidates match. The matching failure may be stipulated as covering Partial Match, or covering both Partial Match and Full Match.

FIG. 2 is a flowchart of an embodiment of the present invention. The process includes:
Step 201: The MG performs detection according to a set event capable of reporting a matching result, where the setting of the event includes the setting of a matching failure reporting parameter in the event.

The event capable of reporting a matching result and the matching failure reporting parameter in the event may be set by the MGC onto the MG, or preset on the MG.

Step 202: The MG performs matching, and decides whether to report a matching result according to the value of the matching failure reporting parameter. If the matching succeeds, the MG reports the event to the MGC; if the matching fails, the MG decides whether to report the event to the MGC according to the value of the matching failure reporting parameter.

If the value of the matching failure reporting parameter is "On", the event needs to be reported;

If the value of the matching failure reporting parameter is "Off', the event does not need to be reported.

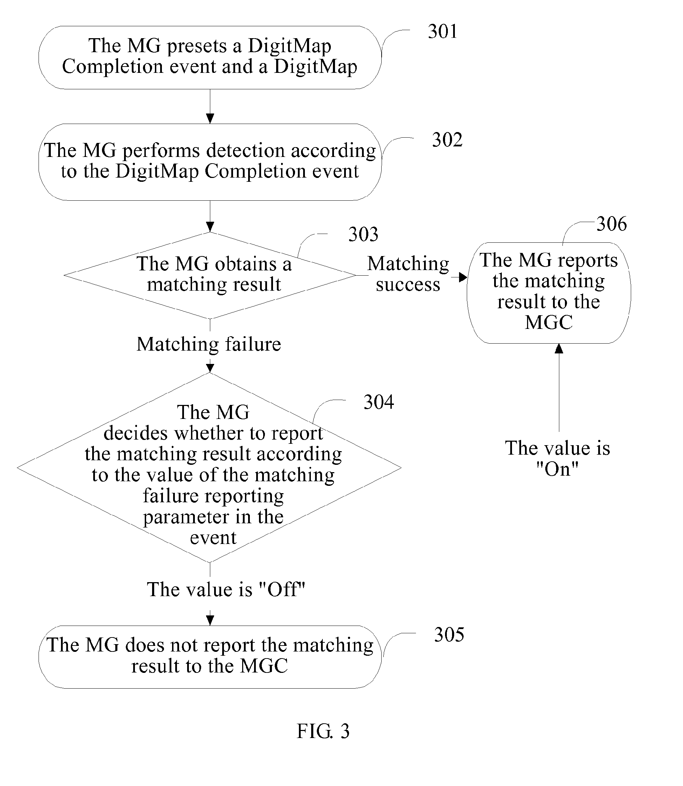

FIG. 3 is a flowchart of another embodiment of the present invention. In this embodiment, the MG uses a DigitMap to match the dialed digits and report the matching result, as detailed below:
Step 301: The MGC sets a DigitMap Completion event and a DigitMap onto the MG, or the event and the DigitMap are preset on the MG. The value of the matching failure reporting parameter in the DigitMap Completion event is "On" or "Off'.
Step 302: The MG performs detection according to the DigitMap Completion event, namely, matches the received digits dialed by the user with the DigitMap.
Step 303: The MG obtains a matching result, which may be Unambiguous Match, Partial Match, or Full Match. In this embodiment, it is stipulated that only Unambiguous Match is regarded as matching success. Therefore, if the matching result is Partial Match or Full Match, the matching fails, and the process proceeds to step 304; if the matching result is Unambiguous Match, the matching succeeds, and the process proceeds to step 306.
Step 304: The MG decides whether to report the matching result according to the value of the matching failure reporting parameter in the DigitMap Completion event. If the value is "Off', the process proceeds to step 305; if the value is "On", the process proceeds to step 306.
Step 305: The MG does not report the matching result to the MGC.
Step 306: The MG reports the matching result to the MGC.

In this embodiment, a matching failure reporting parameter is set by the MGC onto the MG, or is preset on the MG. This parameter controls the MG whether to report the result of matching failure to the MGC, thus reducing the system overhead and improving the operation efficiency.

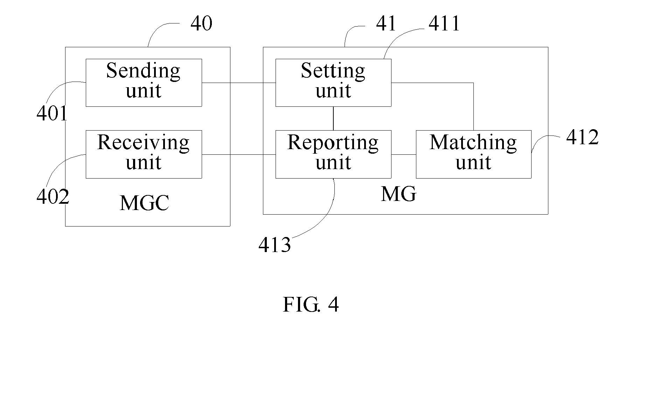

FIG. 4 shows a structure of a system in an embodiment of the present invention. The system includes an MGC 40 and an MG 41.

The MGC includes a sending unit 401, which is configured to send settings to the MG 41, instructing the MG to set an event capable of reporting a matching result (for example, DigitMap Completion event, or Detection Events Map event) and to set a matching failure reporting parameter in the event.

The matching failure reporting parameter is of a Boolean type. If the value of the parameter is "On", the result of matching failure needs to be reported; if the value of the parameter is "Off', the result of matching failure does not need to be reported. By default, the value of the parameter is "On"_{.}

The MGC further includes a receiving unit 402, which is configured to receive the matching result reported by the MG.

The MG includes:
a setting unit 411, configured to set an event capable of reporting a matching result and a matching failure reporting parameter in the event according to the command of the MGC 40 or presetting on the MG 41;
a matching unit 412, configured to perform detection according to the event set by the setting unit 411 and obtain a matching result; and
a reporting unit 413, configured to decide whether to report the matching result to the MGC 40 according to the value of the matching failure reporting parameter in the event set by the setting unit 411. If the value of the matching failure reporting parameter is "On", the MG reports the detection result to the MGC; or, if the value of the matching failure reporting parameter is "Off', the MG does not report the detection result to the MGC.

In this embodiment, a matching failure reporting parameter is set by the MGC onto the MG, or is preset on the MG. This parameter controls the MG whether to report the result of matching failure to the MGC, thus reducing the system overhead and improving the operation efficiency.

Based on the descriptions of the preceding embodiments, those skilled in the art may understand that the present invention may be implemented by hardware only or by software and a necessary universal hardware platform. The technical solution of the present invention may be embodied by a software product which may be stored in a nonvolatile storage medium. The storage medium can be a Compact Disk Read-Only Memory (CD-ROM), a USB disk, or a mobile hard disk. The software product includes a number of instructions that enable a computer device (personal computer, server, or network device) to execute the methods provided in the embodiments of the present invention.

The above descriptions are merely some exemplary embodiments of the present invention, but not intended to limit the scope of the present invention. Any modification, equivalent replacement, or improvement made without departing from the spirit and principle of the present invention should fall within the scope of the present invention.

## Claims

1. A method for controlling reporting of a matching result, comprising:
performing detection, by a Media Gateway (MG), according to a set event capable of reporting the matching result, wherein the event comprises a matching failure reporting parameter; and
when the detection result is matching failure, deciding whether to report a detection result according to the value of the matching failure reporting parameter.

2. The method of claim 1, wherein the MG decides whether to report the detection result according to the value of the matching failure reporting parameter in the following way:
if the value of the matching failure reporting parameter is "On", the detection result needs to be reported to a Media Gateway Controller (MGC);
if the value of the matching failure reporting parameter is "Off', the detection result does not need to be reported to the MGC.

3. The method of claim 1 or 2, wherein:
the event is set by the MGC onto the MG or preset on the MG.

4. The method of claim 3, wherein:
the event is a DigitMap Completion event or a Detection Events Map event.

5. The method of claim 1, wherein:
the detection result is regarded as matching failure if the detection result is Partial Match, or is both Partial Match and Full Match.

6. A Media Gateway (MG), comprising:
a setting unit, configured to set an event capable of reporting a matching result, wherein the event comprises a matching failure reporting parameter;
a matching unit, configured to perform matching according to the event set by the setting unit and obtain the matching result; and
a reporting unit, configured to decide whether to report the matching result obtained by the matching unit to a Media Gateway Controller (MGC) according to a value of the matching failure reporting parameter in the event set by the setting unit.

7. A Media Gateway Controller (MGC), comprising:
a sending unit, configured to send settings to a Media Gateway (MG), instructing the MG to set an event capable of reporting a matching result and to set a matching failure reporting parameter in the event; and
a receiving unit, configured to receive a detection result reported by the MG.
